# EUROPÄISCHE PATENTSCHRIFT

(11) **EP 1 190 833 B1**
(45) Veröffentlichungstag und Bekanntmachung des Hinweises auf die Patenterteilung: **30.01.2008**
(21) Anmeldenummer: 01121928.4
(22) Anmeldetag: 12.09.2001
(51) Int. Cl.: B29C 45/64, B29C 45/56

(54) **Flächendruckerzeugungseinrichtung bei einer Spritzgiessmaschine**
Surface pressure generating device in an injection moulding machine
Dispositif pour appliquer une pression de surface dans une machine à injecter

(30) Priorität: 25.09.2000 DE 10047363
(43) Veröffentlichungstag der Anmeldung: 27.03.2002
(73) Patentinhaber: SIEMENS AKTIENGESELLSCHAFT, 80333 München (DE)
(72) Erfinder: Hamann, Jens, Dr., 90765 Fürth (DE)

(56) Entgegenhaltungen:
- DE-A- 19 531 131
- DE-C- 4 336 572
- DE-C- 19 510 488
- PATENT ABSTRACTS OF JAPAN vol. 018, no. 411 (M-1648), 2. August 1994 (1994-08-02) -& JP 06 122136 A (HITACHI LTD), 6. Mai 1994 (1994-05-06)
- PATENT ABSTRACTS OF JAPAN vol. 1998, no. 05, 30. April 1998 (1998-04-30) & JP 10 012649 A (NEC YAMAGATA LTD), 16. Januar 1998 (1998-01-16)
- PATENT ABSTRACTS OF JAPAN vol. 018, no. 083 (M-1558), 10. Februar 1994 (1994-02-10) -& JP 05 293861 A (KANEGAFUCHI CHEM IND CO LTD), 9. November 1993 (1993-11-09)

## Beschreibung

Die Erfindung bezieht sich auf eine Flächendruckerzeugungseinrichtung, insbesondere bei einer Spritzgießmaschine, mit einer stationären Trägerplatte und einer zu dieser verfahrbaren und in Arbeitsposition arretierbaren Aufspannplatte, die an ihrer der Trägerplatte zugewandten Seite eine elektromechanisch ausrückbare Schließplatte aufweist, wobei zwischen dieser und der Trägerplatte zu pressendes Material oder zu verspannende Werkzeuge angeordnet sind.

Eine derartige Flächendruckerzeugung ist aus der DE 43 36 572 C1 prinzipiell bekannt. Aufspannplatte und Schließplatte einer Spritzgießmaschine werden dabei durch einen ersten Verfahrmechanismus relativ schnell verfahren, dann wird in Arbeitsposition die Aufspannplatte arretiert. Der Spritzgießvorgang wird gestartet und zum Abstützen der von der Kunststofffließfront ausgehenden Kräfte wird die Schließplatte ausgerückt, indem auf ein positiv magnetostriktives Material ein magnetisches Wechselfeld aufgebracht wird.

Eine auf diesem Prinzip wirkende elektromechanische Ausrückung hat jedoch den Nachteil, dass relativ hohe Stromstärken erforderlich sind. Zudem muss sogar im stationären Zustand ein Dauerstrom aufrechterhalten werden.

Darüber hinaus ist aus der Druckschrift JP-A-06122136 eine Flächendruckerzeugungseinrichtung bekannt, mit der Spritzgußerzeugnisse sehr präzise hergestellt werden können. Dabei wird eine bewegbare Formhälfte von einer Montagplatte auf eine gegenüberliegende statische Formhälfte gedrückt. Beim Einspritzen des Gussmaterials würde sich die bewegliche Formhälfte auf Grund des Gegendrucks durch das Gussmaterial verformen. Um diese Verformung zu korrigieren werden einer oder mehrere Piezoelektrische Aktoren eingesetzt, die die Formhälfte an gewünschten Stellen zusätzlich gegen die andere Formhälfte drücken.

Aufgabe der Erfindung ist es, eine Flächendruckerzeugungseinrichtung der eingangs genannten Art so auszubilden, dass in technisch möglichst einfacher Weise eine schnelle und leistungsstarke elektromechanische Ausrückung erfolgt.

Gemäß der Erfindung wird diese Aufgabe durch eine Flächendruckerzeugungseinrichtung nach Anspruch 1 gelöst.

Diese Bauteile haben sich seit langem für vielfältige Aufgaben in der Technik bewährt, sind jedoch zum Ausrücken von Schließplatten von Flächendruckerzeugungseinrichtungen bislang weder vorgeschlagen noch eingesetzt worden.

Außderdem ist erfindungsgemäß auch die Schließplatte in mindestens einer einem Piezohub ausmachenden Zwischenposition arretierbar, aus der heraus die Aufspannplatte nachführbar ist, worauf diese arretiert wird und die Schließplatte durch einen weiteren Piezohub ausrückt.

Eine erste vorteilhafte Ausbildung der Erfindung ist dadurch gekennzeichnet, dass die piezoelektrischen Aktoren beliebig, vorzugsweise matrixartig über die Fläche zwischen Aufspannplatte und Schließplatte verteilt sind. Damit ergibt sich eine technisch einfach realisierbare und überschaubare Anordnung der Aktoren. Es ist jedoch auch möglich, dass die piezoelektrischen Aktoren entsprechend einer gewünschten Kraftverteilung über die Fläche zwischen Aufspannplatte und Schließplatte verteilt sind (hardwaremäßige Realisierung der Kraftverteilung). Wie eine derartige Anordnung zu treffen ist, kann analytisch oder durch Versuche ermittelt werden. Eine zweite Möglichkeit einer Kraftverteilung zu entsprechen, besteht in der unterschiedlichen Ansteuerung der piezoelektrischen Aktoren(softwaremäßige Realisierung der Kraftverteilung).

Dadurch, dass die piezoelektrischen Aktoren bei dynamischem Verhalten des zu verpressenden Materials bzw. der zu verspannenden Werkzeuge dem angepasst, ebenfalls dynamisch auslösbar sind, kann das Ansprechverhalten maschinenschonend gestaltet werden.

Die piezoelektrischen Aktoren können mit beliebiger Geometrie, vorzugsweise quaderförmig, entsprechend den Fertigungsmöglichkeiten hergestellt werden und lassen sich daher an alle Maschinenerfordernisse relativ leicht anpassen.

Es können durchaus zusätzliche piezoelektrische Sensoren zwischen Schließplatte und Aufspannplatte vorgesehen sein, damit völlig unabhängig von den piezoelektrischen Aktoren Druckmessungen vorgenommen werden können. Es ist jedoch auch möglich, dass im Betrieb eine Untermenge der piezoelektrischen Aktoren als piezoelektrische Sensoren verwendbar sind und ebenso ist es auch möglich, dass im Betrieb piezoelektrische Aktoren kurzzeitig als piezoelektrische Sensoren verwendbar sind. Die beiden letztgenannten Alternativen haben den Vorteil, dass eine Doppelnutzung der piezoelektrischen Aktoren erfolgt, in dem diese als piezoelektrische Sensoren verwendet werden.

Ein Ausführungsbeispiel der Erfindung ist in der Zeichnung dargestellt und wird im folgenden näher erläutert, dabei zeigen:
- FIG 1: Elemente einer Kunststoffspritzgießmaschine und
- FIG 2: eine Anordnungsmöglichkeit von piezoelektrischen Aktoren.

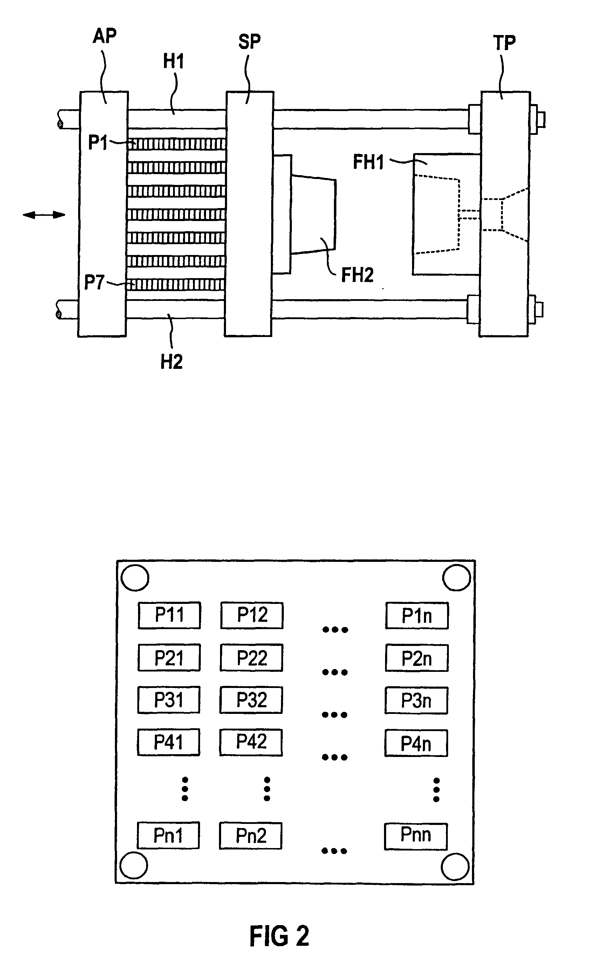

In der Darstellung gemäß FIG 1 sind für die vorliegende Erfindung wesentliche Elemente einer Kunststoffspritzgießmaschine gezeigt. Diese ist dabei im ausgefahrenen Zustand gezeigt, bei dem zwei Formhälften FH1 und FH2 voneinander beabstandet sind, so dass ein der Übersichtlichkeit halber nicht gezeigtes fertiges Formteil aus der Maschine entnommen werden kann. Die Formhälfte FH1, deren Innenkontur gestrichelt angedeutet ist, ist auf einer stationären Trägerplatte TP befestigt. Von dieser gehen von jeder Ecke Holme aus, von denen in der Darstellung nur die Holme H1 und H2 ersichtlich sind. Auf diesen Holmen, so den Holmen H1 und H2, ist eine Aufspannplatte AP bidirektional durch einen der Übersichtlichkeit halber nicht gezeigten Antrieb relativ schnell bewegbar, wobei diese Bewegung durch einen Doppelpfeil angedeutet ist. Mit der Aufspannplatte AP ist eine gleitend auf den Holmen, so den Holmen H1 und H2, mitbewegliche Schließplatte SP angeordnet, wobei zwischen der Aufspannplatte AP und der Schließplatte SP piezoelektrische Aktoren angeordnet sind, von denen in der Darstellung gemäß FIG 1 nur die piezoelektrischen Aktoren P1 bis P7 ersichtlich sind. Um die piezoelektrischen Aktoren vor unzulässigen Zugspannungen zu schützen, werden diese mechanisch vorgespannt zwischen der Schließplatte SP und der Aufspannplatte AP montiert.

Wenn ein Werkstück zu erstellen ist, werden Aufspannplatte AP und Schließplatte SP so verfahren, dass die Formhälften FH1 und FH2 zusammenstoßen. Sodann wird die Aufspannplatte AP in ihrer Lage gegenüber den Holmen, so den Holmen H1 und H2 durch ebenfalls der Übersichtlichkeit halber nicht dargestellte Hilfsmittel kraft- und/oder formschlüssig verriegelt und das thermoplastische Material kann in den Raum zwischen Formhälfte FH1 und FH2 eingespritzt werden. Dem Fließdruck des einspritzenden Materials muss jedoch zum Ausgleichen von mechanischen Verformungen des Gesamtsystems die Formhälfte FH2 mit einer durch die Mechanik der Maschine gegebenen Auslenkung entgegengestemmt werden, was mit Hilfe der piezoelektrischen Aktoren erfolgt, die dazu elektrisch angesteuert werden. Dieses Ansteuern kann dabei für alle Aktoren gleichzeitig oder aber durch eine entsprechend den Ausbreitungseigenschaften des Kunststoffes zwischen den Formhälften FH1 und FH2 angepasste, zeitlich gestaffelte Reaktion der piezoelektrischen Aktoren erfolgen.

Die Tatsache, dass die Piezoaktoren über die Fläche der Schließplatte SP verteilt angeordnet sind, ist der Darstellung gemäß FIG 2 entnehmbar, bei der gezeigt ist, das außer der einen Reihe von piezoelektrischen Aktoren noch weitere Reihen von piezoelektrischen Aktoren vorgesehen sein können. Die Anzahl und die Geometrie der piezoelektrischen Aktoren hängt dabei von der erforderlichen Schließkraft und den auszugleichenden Dehnungen der Flächendruckerzeugungseinrichtung ab. Die hier vorzugsweise gezeigte, streng matrixartige Anordnung kann aber entsprechend den Maschinenerfordernissen durchaus variiert werden und ist beliebig wählbar. Dazu ist das mechanische Verhalten des Systems für die verwendeten Werkzeuge und Maschinen zu ermitteln.

Wesentlich für die vorliegende Erfindung ist es, dass ein solches Ermitteln der mechanischen Verhältnisse dadurch erfolgen kann, dass im Betrieb jeweils eine Untermenge der piezoelektrischen Aktoren als piezoeketrische Sensoren verwendbar sind. Diese Aktoren werden dann nicht mit einer Steuerspannung beaufschlagt, die den Piezohub auslöst, sondern es wird das generatorische Verhalten der Aktoren ausgenutzt, dass nämlich bei Krafteinfluss eine Spannung an den Aktoren abgegriffen werden kann. Prinzipiell ist es auch denkbar, dass die Aktoren jeweils kurzzeitig allesamt als Sensoren benutzt werden, wobei dazu selbstverständlich Betrachtungen bezüglich der tolerierbaren Bewegungen der vorhandenen Massen getroffen werden müssen. Alternativ oder ergänzend dazu können jedoch durchaus noch weitere nur sensorisch verwendete Piezokeramiken zwischen den piezoelektrischen Aktoren angeordnet sein, die aufgrund ihrer kleineren Abmessungen dort noch Platz finden.

Weil die von den piezoelektrischen Aktoren auslösbaren Wege für das Maschinenverhalten zu gering sind, wird die Schließplatte SP mit einem der Übersichtlichkeit halber ebenfalls nicht dargestellten Mechanismus kraft- und/oder formschlüssig ebenso wie die Aufspannplatte AP fixiert. Zunächst sei die Schließplatte SP nicht verriegelt und ausgehend von einer verriegelten Aufspannplatte AP wird ein Piezohub ausgeführt. Daraufhin wird die Schließplatte SP arretiert und dann die entriegelte Aufspannplatte AP nachgeführt und arretiert, sodann wird die Schließplatte SP gelöst und ein weiterer Piezohub bewerkstelligt.

Unter Flächendruckerzeugungseinrichtungen sind nicht nur Spritzgießmaschinen, sondern beispielsweise auch andere Press- und Druckmaschinen der Fertigungstechnik zu verstehen.

## Patentansprüche

1. Flächendruckerzeugungseinrichtung, insbesondere bei einer Spritzgießmaschine, mit einer stationären Trägerplatte (TP) und einer zu dieser verfahrbaren und in Arbeitsposition arretierbaren Aufspannplatte (AP), die an ihrer der Trägerplatte (TP) zugewandten Seite eine elektromechanisch ausrückbare Schließplatte (SP) aufweist, wobei zwischen dieser und der Trägerplatte (TP) zu verpressendes Material oder zu verspannende Werkzeuge (FH1, FH2) angeordnet sind, und wobei die Druckkraft der Schließplatte (SP) sowie deren Verfahren im Arbeitspunkt mit piezoelektrische Aktoren (P1 bis P7, P11 bis Pnn) realisiert wird,
**dadurch gekennzeichnet, dass** auch die Schließplatte (SP) in mindestens einer einen Piezohub ausmachenden Zwischenposition arretierbar ist, aus der heraus die Aufspannplatte (AP) nachführbar ist, worauf diese arretiert und die Schließplatte (SP) durch einen weiteren Piezohub ausrückt.

2. Flächendruckerzeugungseinrichtung nach Anspruch 1,
**dadurch gekennzeichnet, dass** die piezoelektrischen Aktoren beliebig, vorzugsweise matrixartig über die Fläche zwischen Aufspannplatte (AP) und Schließplatte (SP) verteilt sind.

3. Flächendruckerzeugungseinrichtung nach Anspruch 1,
**dadurch gekennzeichnet, dass** die piezoelektrischen Aktoren (P11-Pnn) entsprechend einer gewünschten Kraftverteilung über die Fläche zwischen Aufspannplatte (AP) und Schließplatte (SP) verteilt sind.

4. Flächendruckerzeugungseinrichtung nach Anspruch 1,
**dadurch gekennzeichnet, dass** die piezoelektrischen Aktoren (P11-Pnn) entsprechend einer gewünschten Kraftverteilung über die Fläche zwischen Aufspannplatte (AP) und Schließplatte (SP) unterschiedlich angesteuert werden.

5. Flächendruckerzeugungseinrichtung nach einem der vorherstehenden Ansprüche, **dadurch gekennzeichnet, dass** die piezoelektrischen Aktoren bei dynamischem Verhalten des zu verpressenden Materials bzw. der zu verspannenden Werkzeuge (FH1, FH2) dem angepasst, ebenfalls dynamisch auslösbar sind.

6. Flächendruckerzeugungseinrichtung nach einem der vorherstehenden Ansprüche, **dadurch gekennzeichnet, dass** eine bestimmte Anzahl von piezoelektrischen Aktoren notwendig ist, die sich aus den erforderlichen Kräften und Dehnungen ableitet.

7. Flächendruckerzeugungseinrichtung nach einem der vorstehenden Ansprüche, **dadurch gekennzeichnet, dass** die piezoelektrischen Aktoren (P11-Pnn) mit beliebiger Geometrie, vorzugsweise quaderförmig, entsprechend der Fertigungsmöglichkeiten hergestellt sind.

8. Flächendruckerzeugungseinrichtung nach einem der vorstehenden Ansprüche, **dadurch gekennzeichnet, dass** zusätzliche piezoelektrische Sensoren zwischen Schließplatte (SP) und Aufspannplatte (AP) vorgesehen sind.

9. Flächendruckerzeugungseinrichtung nach einem der vorstehenden Ansprüche, **dadurch gekennzeichnet, dass** in Betrieb eine Untermenge der piezoelektrischen Aktoren (P11-Pnn) als piezoelektrische Sensoren verwendbar sind.

10. Flächendruckerzeugungseinrichtung nach einem der vorstehenden Ansprüche, **dadurch gekennzeichnet, dass** im Betrieb piezoelektrischen Aktoren (P11-Pnn) kurzzeitig als piezoelektrische Sensoren verwendbar sind.

## Claims

1. Apparatus for generating surface pressure, in particular in an injection molding machine, having a stationary carrier platen (TP) and a clamping platen (AP) which can be moved in relation to said carrier platen (TP) and locked in a working position and which, on its side facing the carrier platen, has a closing platen (SP) that can be moved electromechanically, material to be pressed or tools (FH1,FH2) to be clamped being disposed between said closure platen and the carrier platen (TP), and the compressive force of the closing platen (SP) and the action of moving it at the working point being implemented with piezoelectric actuators (P1 to P7, P11 to Pnn),
**characterized in that** the closing platen (SP) can also be locked in at least one intermediate position which makes up a piezoelectric stroke and from which the clamping platen (AP) can subsequently be guided, the latter then being locked and the closing platen (SP) being moved out by a further piezoelectric stroke.

2. Apparatus for generating surface pressure according to claim 1, **characterized in that** the piezoelectric actuators are distributed as desired, preferably in matrix fashion, over the area between clamping platen (AP) and closing platen (SP).

3. Apparatus for generating surface pressure according to claim 1, **characterized in that** the piezoelectric actuators (P11-Pnn) are distributed over the area between clamping platen (AP) and closing platen (SP) in accordance with a desired force distribution.

4. Apparatus for generating surface pressure according to claim 1, **characterized in that** the piezoelectric actuators (P11-Pnn) are actuated differently over the area between clamping platen (AP) and closing platen (SP) in accordance with a desired force distribution.

5. Apparatus for generating surface pressure according to one of the preceding claims, **characterized in that** in the event of dynamic behavior of the material to be pressed or the tools to be clamped (FH1, FH2), the piezoelectric actuators can likewise be triggered dynamically, matched to said behavior.

6. Apparatus for generating surface pressure according to one of the preceding claims, **characterized in that** a specific number of piezoelectric actuators is needed, which is derived from the necessary forces and expansions.

7. Apparatus for generating surface pressure according to one of the preceding claims, **characterized in that** the piezoelectric actuators (P11-Pnn) are produced with any desired geometry, preferably cube-like, in accordance with the production possibilities.

8. Apparatus for generating surface pressure according to one of the preceding claims, **characterized in that** additional piezoelectric sensors are provided between closing platen (SP) and clamping platen (AP).

9. Apparatus for generating surface pressure according to one of the preceding claims, **characterized in that** during operation, a subset of the piezoelectric actuators (P11-Pnn) can be used as piezoelectric sensors.

10. Apparatus for generating surface pressure according to one of the preceding claims, **characterized in that** during operation, piezoelectric actuators (P11-Pnn) can be used briefly as piezoelectric sensors.

## Revendications

1. Dispositif pour appliquer une pression de surface, en particulier dans une machine à injecter, comprend une plaque support (TP) fixe et une plaque de bridage (AP) mobile par rapport à la précédente et blocable en position de travail, qui a, sur son côté dirigé vers la plaque support (TP), une plaque de fermeture (SP) pouvant être mise hors de prise par voie électromécanique, un matériau à comprimer ou des outils à serrer (FH1, FH2) étant disposés entre la plaque de fermeture et la plaque support (TP), et la force de pression de la plaque de fermeture (SP) ainsi que son déplacement au point de travail étant réalisés par des actionneurs piézoélectriques (P1 à P7, P11 à Pnn),
**caractérisé en ce que**
la plaque de fermeture (SP) peut être arrêtée dans au moins une position intermédiaire, représentant une course piézoélectrique, à partir de laquelle la plaque de bridage (AP) peut être asservie, à la suite de quoi celle-ci est arrêtée et mise hors de prise la plaque de fermeture (SP) par une autre course piézoélectrique.

2. Dispositif pour appliquer une pression de surface selon la revendication 1, **caractérisé en ce que** les actionneurs piézoélectriques sont répartis librement, de préférence à la façon d'une matrice, sur la surface entre la plaque de bridage (AP) et la plaque de fermeture (SP).

3. Dispositif pour appliquer une pression de surface selon la revendication 1, **caractérisé en ce que** les actionneurs piézoélectriques (P11-Pnn) sont répartis selon une répartition des forces souhaitée sur la surface entre la plaque de bridage (AP) et la plaque de fermeture (SP).

4. Dispositif pour appliquer une pression de surface selon la revendication 1, **caractérisé en ce que** les actionneurs piézoélectriques (P11-Pnn) sont pilotés différemment selon une répartition des forces souhaitée sur la surface entre la plaque de bridage (AP) et la plaque de fermeture (SP).

5. Dispositif pour appliquer une pression de surface selon l'une des revendications précédentes, **caractérisé en ce que** les actionneurs piézoélectriques, en cas de comportement dynamique du matériau à comprimer ou des outils à serrer (FH1, FH2) y sont adaptés, en étant également déclenchables de façon dynamique.

6. Dispositif pour appliquer une pression de surface selon l'une des revendications précédentes, **caractérisé en ce qu'**un certain nombre d'actionneurs piézoélectriques est nécessaire, lequel est dérivé des forces et dilatations nécessaires.

7. Dispositif pour appliquer une pression de surface selon l'une des revendications précédentes, **caractérisé en ce que** les actionneurs piézoélectriques (P11-Pnn) sont réalisés en ayant une géométrie choisie à volonté, en étant de préférence parallélépipédique, en fonction des possibilités de production.

8. Dispositif pour appliquer une pression de surface selon l'une des revendications précédentes, **caractérisé en ce que** des actionneurs piézoélectriques supplémentaires sont prévus entre la plaque de fermeture (SP) et la plaque de bridage (AP).

9. Dispositif pour appliquer une pression de surface selon l'une des revendications précédentes, **caractérisé en ce que**, en fonctionnement, un sous-ensemble des actionneurs piézoélectriques (P11-Pnn) est utilisable en tant que capteurs piézoélectriques.

10. Dispositif pour appliquer une pression de surface selon l'une des revendications précédentes, **caractérisé en ce que**, en fonctionnement, des actionneurs piézoélectriques (P11-Pnn) sont utilisables brièvement en tant que capteurs piézoélectriques.
